# EUROPÄISCHE PATENTANMELDUNG

(11) **EP 0 861 746 A2**
(43) Veröffentlichungstag der Anmeldung: **02.09.1998**
(21) Anmeldenummer: 98103049.7
(22) Anmeldetag: 20.02.1998
(51) Int. Cl.: B60H 1/00

(54) **Schaltungsanordnung zur Stromversorgung eines Belüftungsgebläses und eines Akkumulators mittels Solarzellen in einem Fahrzeug**

(30) Priorität: 01.03.1997 DE 19708368
(71) Anmelder: WEBASTO KAROSSERIESYSTEME GmbH, D-82131 Stockdorf (DE)
(72) Erfinder: Weissbrich, Alfons, Dr., 82131 Gauting (DE); Ganz, Thomas, 82131 Stockdorf (DE)
(74) Vertreter: Wiese, Gerhard

(57) **Zusammenfassung**

Die Erfindung betrifft Schaltungsanordnung zur Stromversorgung eines Belüftungsgebläses zur Kühlung eines Kraftfahrzeug-Innenraums oder eines Kraftfahrzeug-Akkumulators mittels Solarzellen, mit einem manuell betätigbaren Schalter zum Umschalten der Solarzellen-Stromzufuhr zum Belüftungsgebläse bzw. zum Akkumulator. Erfindungsgemäß ist eine automatische Steuerung (vollautomatische Betriebsart) zum automatischen Umschalten der Solarzellen-Stromzufuhr nach Maßgabe der Temperatur im Kraftfahrzeug-Innenraum und/oder des Akkumulator-Ladezustands vorgesehen, wobei die automatische Steuerung durch Betätigung des Betätigungsorgangs (1) des manuell betätigbaren Schalters übersteuerbar ist (halbautomatische Betriebsart), und eine optische Anzeigeeinrichtung (8, 9, 10) für die automatische und/oder die halbautomatische Betriebsart.

## Beschreibung

Die Erfindung betrifft eine Schaltungsanordnung zur Stromversorgung eines Belüftungsgebläses zur Kühlung eines Kraftfahrzeug-Innenraums und eines Kraftfahrzeug-Akkumulators mittels Solarzellen, mit einem manuell betätigbaren Schalter zum Umschalten der Solarzellen-Stromzufuhr zum Belüftungsgebläse bzw. Akkumulator.

Eine derartige Schaltungsanordnung ist aus der DE 36 10 767 C2 bekannt. In der Stellung des manuell betätigbaren Schalters für die Zufuhr des Solarzellenstroms zum Akkumulator sind die Solarzelleneinheiten in Reihe geschaltet, während in der Schalterstellung zur Zufuhr des Solarzellenstroms zum Belüftungsgebläse die Solarzellen parallelgeschaltet sind, um im ersten Fall eine Spannung oberhalb der Akkumulatorspannung von üblicherweise 12 Volt abzugeben, und im zweiten Fall eine Spannung unterhalb der Akkumulatorspannung, üblicherweise etwa 6 Volt, abzugeben. Bevorzugt ist der manuell betätigbare Schalter durch das Zündschloß ersetzt, um den Kraftfahrzeug-Innenraum bei abgestelltem Fahrzeug und Sonnenbestrahlung der Solarzellen zu belüften und zu kühlen, wahrend im Fahrbetrieb der Akkumulator aufgeladen wird.

Aus der DE 29 52 080 C2 ist eine Schaltungsanordnung zur Solarzellen-Stromversorgung eines Belüftungsgebläses zur Kühlung eines Kraftfuhrzeug-Innenraums bekannt, der wahlweise auf Sommer- oder Winterbetrieb einstellbar ist, wobei bei Sommerbetrieb das Belüftungsgebläse erst ab einer vorbestimmten Innerraumtemperatur in Gang gesetzt wird.

Aus der DE 41 39 435 C2 ist es bekannt, bei einer Solarzellen-Stromversorgung eines Kraftfahrzeug-Akkumulators die Aufladung des Akkumulators nach Maßgabe der Ladespannung des Akkumulators und der Leerlaufspannung der Solarzelle vorzunehmen.

Bekannt sind ferner unterschiedliche Bauarten für Schalter, einschließlich Schalter mit Schaltwippe und Schalter, deren Betätigungsorgan Symbole zugeordnet sind, die gegebenenfalls direkt auf dem Betätigungsorgan angeordnet sein können. Bekannt ist es ferner, Leuchtdioden im Betätigungsorgan von Schaltern anzuordnen, um einen Schaltzustand optisch anzuzeigen. Beispielsweise ist es in diesem Zusammenhang aus der DE 42 29 756 A1 bekannt, eine Sperrstellung eines Handbetätigungselements mittels Farbaufdruck bzw. Aufdruck eines Zeichensymbols zu markieren. Ein Schalter mit einem Betätigungsorgan in Gestalt einer Wippe mit Tasterfunktion in der Neutralstellung und beleuchtbaren Markierungen sämtlicher drei Schalterstellungen ist aus der DE 42 42 100 A1 bekannt.

Der Erfindung liegt die Aufgabe zugrunde, eine Schaltungsanordnung der eingangs genannten Art zu schaffen, durch die die Solarzellen-Stromzufuhr zum Belüftungsgebläse bzw. zum Akkumulator optimal steuerbar und anzeigbar ist.

Gelöst wird diese Aufgabe durch die kennzeichnenden Merkmale des Anspruchs 1. Vorteilhafte Weiterbildungen der Erfindung sind in den Unteransprüchen angegeben.

Demnach sieht die erfindungsgemäße Schaltungsanordnung eine vollautomatische Betriebsart vor, bei welcher eine vollautomatische Umschaltung zwischen der Solarzellen-Stromzufuhr zu dem Belüftungsgebläse bzw. dem Akkumulator nach Maßgabe steuerungsrelevanter Parameter, wie beispielsweise der Innenraum-Temperatur oder der Batteriespannung, erfolgt. Außerdem sieht die erfindungsgemäße Schaltungsanordnung eine halbautomatische Betriebsart vor, die durch Übersteuerung der vollautomatischen Betriebsart mittels Betätigung des manuell betätigbaren Schalters aktivierbar ist. Dadurch kann vom Fahrer eines Kraftfahrzeugs jederzeit unabhängig von der vollautomatischen Betriebsart ein Belüftungsmodus bzw. ein Akkumulator-Lademodus gewählt werden. Welche Betriebsart vorliegt, nämlich die automatische oder halbautomatische Betriebsart, wird erfindungsgemäß durch eine optische Anzeigeeinrichtung angezeigt.

Die optische Anzeigeeinrichtung ist vorteilhafterweise in das Betätigungsorgans des Schalters integriert, und zwar bevorzugt in Form von wenigstens einer Leuchtdiode. Zur Anzeige der aktuellen Betriebsart und/oder der Solarzellen-Stromzufuhr zum Akkumulator oder zum Belüftungsgebläse ist vorteilhafterweise entweder vorgesehen, daß die Leuchtdiode zwischen dunkel und hell wechselt und/oder daß die Leuchtdiode ihre Blinkfrequenz ändert.

Gemäß einer besonders vorteilhaften Weiterbildung der Erfindung ist das Betätigungsorgans des manuell betätigbaren Schalters als Wippe mit Tasterfunktion in der Neutralstellung der Wippe zur Aktivierung der automatischen Betriebsart ausgebildet, die bei Betätigung der Wippe zugunsten eines Batterielademodus - erste Wippenendstellung - bzw. eines Lüftungsmodus - zweite Wippenendstellung - übersteuerbar ist.

Bevorzugt sind in den beiden Wippenendabschnitten den jeweiligen Betriebsmodus bezeichnende Symbole angeordnet. Bevorzugt sind diesen Symbolen zur besseren Erkennbarkeit des Betriebsmodus Leuchtdioden zugeordnet, die durch Betätigung des jeweiligen Wippenendes aktiviert werden.

Vorteilhafterweise ist der Wippenneutralstellung ebenfalls ein die Automatikbetriebsart bezeichnendes Symbol zugeordnet, dem bevorzugt ebenfalls eine Leuchtdiode zugeordnet ist, die durch Betätigen des Tasters aktiviert wird.

Um Strom zu sparen, können die Leuchtdioden im Blinkmodus betrieben werden.

Alternativ hierzu kann bei der Wippen/Leuchtdioden-Ausbildung die jeweils betätigte Leuchtdiode ihren Anzeigemodus ändern - vom Dauerleuchtmodus in den Blinkmodus bzw. umgekehrt, oder die Farbe ändern - wenn die Solarzellen-Stromzufuhr für die jeweilige Betriebsart unzureichend ist, so daß nicht nur eine Information über die jeweilige Betriebsart bzw. den Betriebsmodus vorliegt, sondern auch über die Stromlieferfähigkeit der Solarzellen.

Nachfolgend wird die Erfindung anhand der Zeichnung beispielhaft näher erläutert.
- Fig. 1: zeigt das Betätigungsorgan des Schalters für die erfindungsgemäße Schaltungsanordnung in Gestalt einer Wippe und

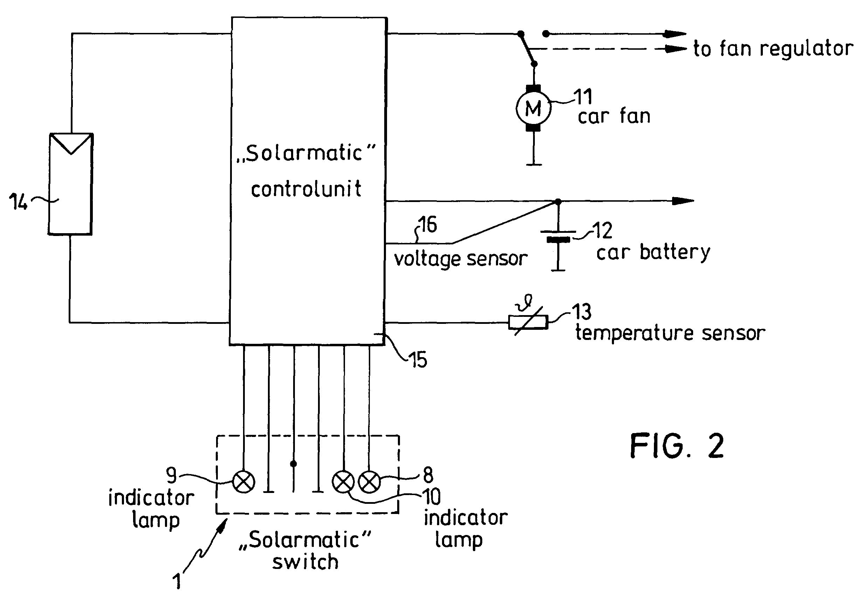

- Fig. 2: zeigt eine schematische Darstellung einer Steuerungsanordnung.

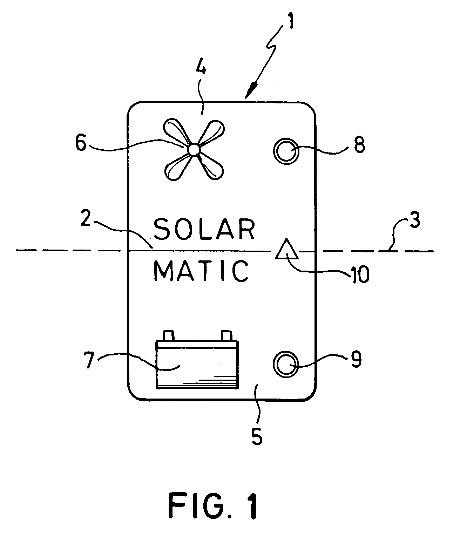

In der Fig. 1 ist der Schalter allgemein mit der Bezugsziffer 1 bezeichnet. Die Wippe 1 ist in an sich bekannter Weise tailliert bzw. konvex gekrümmt so gebildet, daß ihr zentraler Bereich 2 entlang der Wippenschwenkachse 3 tieferliegt als die beiden außenliegenden Endbereiche 4 und 5, durch deren Betätigung der nicht näher gezeigte Wippschalter umsteuerbar ist.

Der Wippschalter 1 und damit dessen Wippe werden in neutraler Stellung durch Federkraft gehalten, in welcher die Wippe sich in ausgeglichener Stellung befindet; d.h. die beiden Wippenendabschnitte 4 und 5 liegen auf demselben Niveau.

Der Wippschalter für die erfindungsgemäße Schaltanordnung ist außerdem mit einer Tasterfunktion versehen, die aktivierbar ist, indem die Wippe 1 im zentralen Bereich 2 niedergedrückt wird. Mit anderen Worten ist die Wippe 1 senkrecht zu ihrer Hauptfläche durch Federkraft in eine Neutralstellung vorgespannt, die durch Niederdrücken der Wippe 1 im zentralen Bereich 2 überwunden werden kann.

Dem oberen Endabschnitt 4 der Wippe 1 ist der Belüftungsmodus der erfindungsgemäßen Schaltungsanordnung zugeordnet, während dem unteren Endabschnitt 5 der Akkumulatorauflademodus zugeordnet ist. Verdeutlicht sind diese Funktionen durch entsprechende Symbole, nämlich durch die schematische Darstellung eines Lüfters 6 im oberen Endabscbnitt 4 der Wippe 1 und einer Batterie 7 im unteren Endabschnitt 5 der Wippe 1. Außerdem ist dem Symbol "Lüfter" eine Leuchtdiode 8 zugeordnet, die in die Wippe 1 ebenso integriert ist wie eine Leuchtdiode 9, die dem Batteriesymbol 7 zugeordnet ist. Die Dioden 8 und 9 können zur zusätzlichen Unterscheidung des jeweiligen Betriebsmodus unterschiedlich farbiges Licht emittieren. Alternativ hierzu können zur Bezeichnung des einen Betriebsmodus eine Diode und zur Bezeichnung des anderen Betriebsmodus zwei Dioden verwendet werden.

Der Tasterfünktion im zentralen Bereich der Wippe 1 ist die vollautomatische Betriebsart der erfindungsgemäßen Schaltungsanordnung zugeordnet. Diese Betriebsart ist bei der dargestellten Ausführungsform der Wippe 1 durch den Schriftzug "SOLARMATIC" bezeichnet und zusätzlich gekennzeichnet durch eine weitere Leuchtdiode 10, die diesem Schriftzug zugeordnet in die Wippe 1 integriert ist.

Die erfindungsgemäße Schaltungsanordnung ist so getroffen, daß bei Einschalten der Zündung die vollautomatische Betriebsart aktiviert wird, bei welcher eine automatische Steuerung der Solarzellen-Stromzufuhr nach Maßgabe der von einem Temperatursensor 13 ermittelten Temperatur im Kraftfahrzeug-Innenraum und/oder des Akkumulator-Ladezustands erfolgt, der von einem Spannungsmesser 16 detektiert wird. Diese vollautomatische Betriebsart ist durch Aufleuchten der Diode 10 verdeutlicht.

Falls der Fahrer des Kraftfahrzeugs in der vollautomatischen Betriebsart unter Stromzufuhr der Solarzellen 14 zum Akkumulator (Batterie 12) eine Abkühlung des Kraftfahrzeug-Innenraums wünscht, kann er die vollautomatische Betriebsart übersteuern, indem er die Wippe 1 im oberen Endabschnitt 4 betätigt, was durch Aufleuchten der Diode 8 und Erlöschen der Diode 10 quittiert wird. In dieser manuell gewählten Betriebsart leuchtet die Leuchtdiode 8, die dem Lüftersymbol 6 zugeordnet ist, kontinuierlich oder sie blinkt. In diesem Fall wird bevorzugt der Lüftermotor 11 angetrieben und nur ein eventueller Energieüberschuß der Solarzellen 14 zur Ladung der Batterie 12 verwendet. Dieser manuell gewählte Betriebszustand kann entweder dadurch aufgehoben werden, daß die Wippe 1 erneut im zentralen Bereich 10 niedergedrückt wird (Anwahl der automatischen Betriebsart), oder dadurch, daß der andere Endabschnitt 5 der Wippe 1 betätigt wird (Anwahl des Akkumulator-Lademodus), woraufhin die Leuchtdiode 8 erlischt und entweder die Leuchtdiode 10 oder die Leuchtdiode 9 Licht aussendet. In dieser Stellung wird bevorzugt die Batterie 12 geladen und nur ein eventueller Energie-Überschuß der Solarzellen 14 für den Antrieb des Lüftermotors 11 verwendet, sofern gleichzeitig die Innenraum-Temperatur einen Lüfterbetrieb erfordert. Alternativ hierzu kann eine Logik in der Schaltungsanordnung so gebildet sein, daß bei Erreichen einer vorbestimmten Temperaturschwelle die vollautomatische Betriebsart (Leuchtdiode 10 leuchtet auf) ausgehend von dem Belüftungsmodus wiederaufgenommen wird, oder alternativ hierzu, nach Ablauf einer vorbestimmten Zeitperiode.Der Solarmatic-Modus wie auch die manuellen Betriebsarten werden von einer Steuereinheit 15 gesteuert, die zu diesem Zweck mit dem Schalter 1, den Solarzellen 14, dem Lüftermotor 11, dem Spannungsmesser 16, der Fahrzeugbatterie 12 und dem Innenraum-Temperatursensor 13 verbunden ist.

Dasselbe gilt sinngemäß bei manueller Wahl des Akkumulator-Lademodus ausgehend von der automatischen Betriebsart.

Die erfindungsgemäße Schaltungsanordnung kann auch so ausgelegt sein, daß die jeweils aktivierte Leuchtdiode 8, 9 oder 10 bei ordnungsgemäßer Solarzellen-Stromzufuhr kontinuierlich leuchtet und in einen Blinkmodus übergeht, bzw. umgekehrt, wenn die Solarzellen-Stromzufuhr für die jeweilige Betriebsart unzureichend ist. Alternativ hierzu kann die jeweils aktivierte Leuchtdiode in diesem Fall ihre Farbe ändern, um dem Fahrer anzuzeigen, daß die anliegende Solarzellen-Spannung für die jeweilige Betriebsart unzureichend ist.

### Bezugszeichenliste

- 1.: Schalter
- 2.: Zentraler Bereich der Wippe
- 3.: Wippenschwenkachse
- 4.: Oberer Endabschnitt der Wippe
- 5.: unterer Endabschnitt der Wippe
- 6.: Lüfter (Symbol)
- 7.: Batterie (Symbol)
- 8., 9., 10.: Leuchtdioden
- 11: Gebläsemotor (Lüftermotor)
- 12: Batterie (Akkumulator)
- 13: Temperatursensor
- 14: Solarzellen
- 15: Steuereinheit
- 16: Spannungsmesser

## Patentansprüche

1. Schaltungsanordnung zur Stromversorgung eines Lüftermotors (11) zur Kühlung eines Kraftfahrzeug-Innenraums oder eines Kraftfahrzeug-Akkumulators (12) mittels Solarzellen (14), einem manuell betätigbaren Schalter (1) zum Umschalten der Solarzellen-Stromzufuhr zum Lüftermotor (11) bzw. zum Akkumulator (12), **gekennzeichnet durch** eine automatische Steuerung (15) zum automatischen Umschalten der Solarzellen-Stromzufuhr nach Maßgabe der von einem Temperatursensor (13) gemessenen Temperatur im Kraftfahrzeug-Innenraum und/oder des von einem Spannungsmesser (16) ermittelten Akkumulator-Ladezustands, wobei die automatische Steuerung durch Betätigung des Betätigungsorgangs (1) des manuell betätigbaren Schalters übersteuerbar ist (halbautomatische Betriebsart), und durch eine optische Anzeigeeinrichtung (8, 9, 10) für die automatische und/oder die halbautomatische Betriebsart.

2. Schaltungsanordnung nach Anspruch 1, **dadurch gekennzeichnet**, daß die optische Anzeigeeinrichtung (8, 9, 10) in das Betätigungsorgan (1) des Schalters integriert ist.

3. Schaltungsanordnung nach Anspruch 1 oder 2, **dadurch gekennzeichnet**, daß die optische Anzeigeeinrichtung (8, 9, 10) wenigstens eine Leuchtdiode aufweist.

4. Schaltungsanordnung nach Anspruch 3, **dadurch gekennzeichnet**, daß die Leuchtdiode (8, 9, 10) abhängig von der Betriebsart und/oder der Solarzellen-Stromzufuhr zum Akkumulator (12) oder dem Lüftermotor (11) die Farbe wechselt.

5. Schaltungsanordnung nach Anspruch 3 oder 4, **dadurch gekennzeichnet**, daß die Leuchtdiode (8, 9, 10) abhängig von der Betriebsart und/oder der Solarzellenstromzufuhr zum Akkumulator (12) oder dem Lüftermotor (11) ihre Blinkfrequenz ändert.

6. Schaltungsanordnung nach Anspruch 1 oder 2, **dadurch gekennzeichnet**, daß das Betätigungsorgan (1) des manuell betätigbaren Schalters eine Wippe mit Tasterfunktion in der Neutralstellung der Wippe zur Aktivierung der automatischen Betriebsart ist, die bei Betätigung der Wippe zugunsten eines Batterielademodus in der halbautomatischen Betriebsart (erste Wippenendstellung 5) bzw. eines Belüftungsbetriebs in der halbautomatischen Betriebsart (zweite Wippenendstellung 4) übersteuerbar ist.

7. Schaltungsanordnung nach Anspruch 5, **dadurch gekennzeichnet**, daß den beiden Wippenendabschnitten (4, 5) den jeweiligen Betriebsmodus bezeichnende Symbole (6, 7) zugeordnet sind.

8. Schaltungsanordnung nach Anspruch 7, **dadurch gekennzeichnet**, daß den Symbolen (6, 7) Leuchtdioden (8, 9) zugeordnet sind, die durch Betätigung des jeweiligen Wippenendes (4, 5) aktiviert werden.

9. Schaltungsanordnung nach Anspruch 6, 7 oder 8, **dadurch gekennzeichnet**, daß der Wippenneutralstellung ebenfalls ein die Automatikbetriebsart bezeichnendes Symbol (SOLARMATIC) zugeordnet ist.

10. Schaltungsanordnung nach Anspruch einem der Ansprüche 6 bis 9, **dadurch gekennzeichnet,** daß der Wippenneutralstellung eine Leuchtdiode (10) zugeodnet ist, die durch Betätigen des Tasters aktiviert wird.

11. Schaltungsanordnung nach einem der Ansprüche 6 bis 9, **dadurch gekennzeichnet**, daß die Leuchtdioden (8, 9, 10) im Blinkmodus betrieben sind.

12. Schaltungsanordnung nach einem der Ansprüche 1 bis 11, **dadurch gekennzeichnet**, daß die jeweils betätigte Leuchtdiode (8, 9, 10) ihren Anzeigemodus ändert (vom Dauerleuchtmodus in den Blinkmodus bzw. umgekehrt oder ihre Farbe), wenn die Solarzellen-Stromzufuhr für die jeweilige Betriebsart unzureichend ist.
